Europäisches Patentamt

European Patent Office

Office européen des brevets

(11) Publication number: **0 399 848**
**A2**

# EUROPEAN PATENT APPLICATION

(21) Application number: 90305758.6

(22) Date of filing: 25.05.90

(51) Int. Cl.5: **G11B 5/66, G11B 5/84, G11B 5/72**

(30) Priority: 25.05.89 JP 132176/89
31.10.89 JP 284227/89

(43) Date of publication of application:
**28.11.90 Bulletin 90/48**

(84) Designated Contracting States:
**DE GB**

(71) Applicant: **Hitachi Maxell Ltd.**
**No 1-1-88, Ushitora Ibaraki-shi**
**Osaka-fu(JP)**

(72) Inventor: **Kitakami, Osamu**
**20-2 Kubogaoka 4-chome, Moriyamachi**
**Kitasoma-gun, Ibaraki-ken(JP)**
Inventor: **Ogawa, Yoichi**
**7-9 Yakushidai 4-chome, Moriyamachi**
**Kitasoma-gun, Ibaraki-ken(JP)**
Inventor: **Yamagata, Satoshi**
**1468-5 Furumagi, Ishigemachi**
**Yuki-gun, Ibaraki-ken(JP)**

(74) Representative: **Cresswell, Thomas Anthony**
**et al**
**J.A. Kemp & Co. 14 South Square Gray's Inn**
**London WC1R 5LX(GB)**

(54) **Magnetic recording medium and method of manufacturing the same.**

(57) A magnetic recording medium comprising a non-magnetic substrate and a recording magnetic layer on the substrate or on an underlayer which is on the substrate, the magnetic layer comprising a Co-Cr alloy or a Co-Cr-M alloy wherein M is selected from Pt, Ni and Ta having a Cr-content ratio expressed as the ratio of the Cr-content to the total content of Co + Cr or Co + Cr + M, the magnetic layer having a peak of oxygen content and a peak of Cr-content ratio each located within 20 nm from the surface of the magnetic layer, the oxygen content peak being nearer the surface of the magnetic layer than the Cr-content ratio peak.

EP 0 399 848 A2

# MAGNETIC RECORDING MEDIUM AND METHOD OF MANUFACTURING THE SAME

Field of the Invention

The present invention relates to a magnetic recording medium and a method of manufacturing the same, and more specifically, to a magnetic recording medium having a recording magnetic layer composed of Co-Cr the mechanical characteristics of which are improved and a method of manufacturing the same.

A thin layer type magnetic recording medium having a magnetic metal layer composed of Co-Cr or the like and formed on a non-magnetic substrate has been attracting attention as a high density recording medium and is now in a process of research and development for practical application. In particular, since Co-Cr is a magnetic alloy having very excellent corrosion resistance, it has been studied as a material for a thin layer type magnetic recording medium used in perpendicular and longitudinal magnetic recording to make use of the merit of the alloy.

At present, however, thin layer type magnetic recording mediums composed of CO-Cr or Co-Cr-M alloy (wherein M is selected from the group of Pt, Ni, Ta) (hereinafter, M is referred to as the above) do not have sufficient mechanical durability, which is the reason why they are not yet practically used.

The mechanical durability of the thin layer type magnetic recording medium is determined by two factors: one of them is a pattern in which a lubricant on the surface thereof is exhausted due to the sliding operation of a magnetic head and thus the recording magnetic layer thereof is worn to end the life of the medium; and the other of them is a pattern in which the differences in level formed on a sliding surface between different kind of materials which are caused by the limitation of a magnetic head processing technology and sharp edges at a slider end are brought into contact with the surface of the thin layer medium and damages it, whereby the life of the medium is ended in a moment.

In general, in the case of the thin layer type magnetic recording medium, the latter pattern usually arises, that is, the life of the thin layer medium is usually ended by the damage thereof caused by the above-mentioned partial force applied externally, before the life is ended because the recording magnetic layer has been worn.

Object and Summary of the Invention

To enable the thin layer type magnetic recording medium to endure such an externally applied large partial force, the provision of various hard protective layers on the recording magnetic layer has been studied. Any of the hard protective layers, however, cannot satisfy the requirement for a mechanical strength and thus sufficiently improve the durability of the recording medium.

An object of the present invention is to provide a magnetic recording medium having excellent durability by solving the drawbacks of prior art.

As a means for achieving the above object, the present invention has the peak of an oxygen content and the peak of a Cr existing ratio $Cr/(Co + Cr)$ or $Cr/(Co + Cr + M)$ located within a depth of 20 nm from the surface of the Co-Cr or Co-Cr-M magnetic layer and the former is positioned nearer to the layer surface than the latter, whereby the durability of the Co-Cr or Co-Cr-M magnetic layer is increased.

A method of manufacturing the magnetic recording medium according to the present invention is not particularly limited, but, as an example, it can be manufactured by causing the magnetic recording medium to be subjected to a surface treatment in oxygen plasma.

As another method, it can be manufactured by causing the surface of the magnetic layer to be subjected to a heating treatment in an oxygen atmosphere.

The surface of the magnetic layer in the present invention can be subjected to the heating treatment in the oxygen atmosphere by the following methods (a) and (b).

(a) When the surface of a magnetic surface containing Cr such as Co-Cr or Co-Cr-M is heated in an oxidizing atmosphere to form a surface oxide layer, a partial oxygen pressure is made lower at an initial step than at a latter step. With this method, the recording magnetic layer having sufficient durability can be formed even in a short oxidation treatment time.

In other words, the productivity per unit time of the magnetic recording mediums excellent in durability is greatly improved.

(b) According to another heating treatment method effected in the oxidizing atmosphere, when the portion in the vicinity of the uppermost surface of a Co-Cr or Co-Cr-M layer is made Cr rich in a step before an oxidation treatment is carried out and then oxidized, a Cr rich oxide layer is liable to be formed in the vicinity of the layer surface. Since this Cr rich oxide layer is hard, it well protects the surface of the magnetic layer and greatly improves the durability thereof.

More specifically, according to this manu facturing method of the present invention, a composition modulated Co-Cr layer which is made Cr rich in the vicinity of the layer surface is formed and then it is subjected to the heating treatment in the oxidizing atmosphere, whereby the magnetic recording medium excellent in durability can be obtained.

Description of Drawings

Figure 1 is a schematic cross sectional view showing the structure of a magnetic recording medium according to the present invention;

Figures 2A to 2D are characteristic diagrams showing the result of analysis of the composition in a depth direction of the surface of a Co-Cr layer of specimens A to D manufactured in examples;

Figure 3 is a schematic diagram of an example of a vacuum winding vapor deposition apparatus used for embodying a manufacturing method according to the present invention;

Figure 4 is a characteristic diagram showing the relationship between oxidizing treatment time and sliding strength; and

Figure 5 is a schematic diagram of a continuously winding vapor deposition apparatus used in examples of the present invention.

Detailed Description of Preferred Embodiments

The following mechanism is considered as a reason why the durability is increased by providing the composition distributed as described above in the depth direction of the layer thickness.

More specifically, the composition is relatively Co rich in the vicinity of the layer surface and further a lot of oxygen is mixed therein. As a result, the Co is partially combined with the oxygen and forms an excellent low friction layer composed of CoO or the like on the surface. Further, when a Cr rich portion is located in the deep portion thereof, the Cr is partially combined with the oxygen and forms a hard layer mainly composed of $Cr_2O_3$.

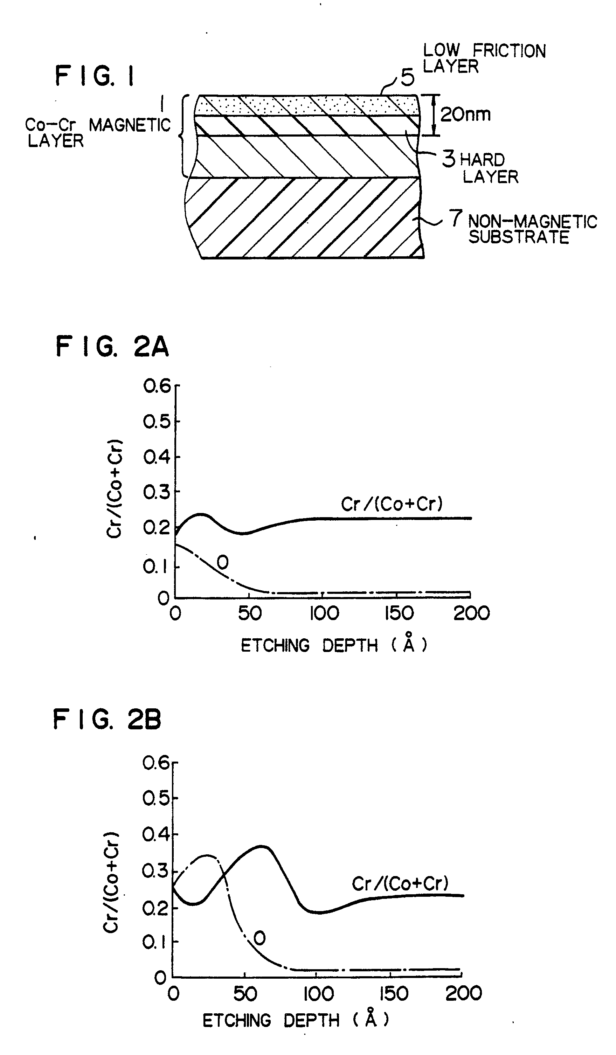

Thus, the Co-Cr or Co-Cr-M thin layer in the present invention is supposed to be formed to the state near to pseudo three layers in which a Co-Cr or Co-Cr-M magnetic layer 1 is composed of a proper metal alloy Co-Cr or Co-Cr-M magnetic layer, a hard layer 3 is formed thereon, and a low friction layer 5 is further formed thereon, as shown in Figure 1. Numeral 7 designates a non-magnetic substrate.

These composition modulated portions are preferably located within a depth of 20 nm from the uppermost layer surface, and even if the depth exceeds 20 nm, a remarkably improvement of the durability is not expected, but recording and reproducing characteristics are deteriorated due to an increase in distance between a magnetic head and the medium.

Further, the peak value of the Cr existing ratio formed on the surface layer of the Co-Cr or Co-Cr-M magnetic layer is preferably 0.3 or more. This is because that when the Cr existing ratio is less than 0.3, the above hard layer portion is insufficiently formed and thus the Co-Cr thin layer 1 is very liable to be damaged by the sliding of the magnetic head.

A compositional ratio by weight of Co to Cr in the Co-Cr magnetic layer used in the magnetic recording layer according to the present invention is preferably 95 : 5 to 75 : 25.

A compositional ratio by weight of (Co + Cr) to M in the Co-Cr-M magnetic layer used in the same is preferably 99.9 : 0.1 to 99 : 10, wherein the ratio by weight of Co to Cr in the same layer is 95 : 5 to 75 : 25.

In the magnetic recording medium according to the present invention, an underlayer may be interposed when the Co-Cr magnetic layer is formed on the non-magnetic substrate, but this is not an essential condition of the present invention. The underlayer can be easily formed by vapor depositing, for example, a non-magnetic material such as Ti or Cr on the substrate.

A usual protective layer and/or a lubricating layer may be formed on the outermost surface of the magnetic layer of the present invention.

Next, A manufacturing method according to the present invention will be described.

It is known that in a thin layer composed of Co-Cr or Co-Ni-Cr alloy, excellent durability is exhibited by the existence of a Cr rich composition modulated region of a high Cr content located in the vicinity of a layer surface. However, a method of manufacturing a Cr type magnetic layer having sufficient durability in a short oxidizing treatment time has not been yet developed except the present invention.

The precise mechanism by which the above-mentioned manufacturing method (a) according to the present invention can provide sufficient durability even with a short oxidizing period has not yet been understood, but it is supposed that an equilibrium dissociation pressure necessary when Cr forms $Cr_2O_3$ is about eight figures lower than that necessary when Co forms CoO, and thus when a specimen is heated and oxidized at a low partial oxygen pressure in which Cr is selectively oxidized, the Cr is selectively oxidized to form a Cr rich oxide layer mainly composed of $Cr_2O_3$ in the vicinity of the layer surface. Further, when the specimen is thereafter heated and oxidized in the atmosphere of a partial oxygen pressure higher than the previous partial pressure, a oxygen pressure in the vicinity of the lower portion of the Cr rich oxide layer (the vicinity of the interface between the Cr rich oxide layer and a metal layer) exceeds the equilibrium dissociation pressure of the Cr and the Cr in the portion is selectively oxidized and thus the above Cr rich oxide layer is gradually thickened. As a result, excellent durability is exhibited.

In the above oxidation process, Co and Cr are diffused to the uppermost surface of the layer through the oxide layer and oxidized. Since, however, a diffusing speed of Co ions is greater than that of Cr ions, when oxidation is carried out for a long time, a Co rich oxide layer is formed on the uppermost layer surface prior to the formation of the Cr rich oxide layer and thus the Co rich oxide layer is gradually thickened. Although the existence of the Co rich oxide layer on the uppermost layer surface is effective to reduce the friction coefficient, the durability is deteriorated when it becomes too rich. However, the growth of the Co rich oxide layer can be restricted and the Cr rich oxide layer which sufficiently improves the sliding characteristic can be obtained in such a manner that an oxidation treatment time is determined such that oxidation is sufficiently achieved and the Co ions are not remarkably diffused.

Note that a temperature at which the specimen is heated in the above oxidation treatment is preferably within a range from 150°C to 450°C, and when it is 150°C or less, atoms are not sufficiently diffused and thus the Cr rich oxide layer is difficult to be formed, and when it is 450°C or more, the magnetism and structure of a thin layer of Co-Cr, Co-Cr-M and the like are changed.

Further, according to the study of the inventors, a partial oxygen pressure preferentially oxidizing Cr within the above temperature range is preferably set within a range from $10^{-2}$ to 10 Torr and further the oxidation thereafter is advantageously carried out within a range from 10 to 1000 Torr from the view point of the sliding characteristic and productivity. Of course, these oxidation processes are not necessary to be clearly separated to two steps, but can be continuously changed.

A composition modulated Co-Cr or Co-Cr-M layer necessary to embodying the above manufacturing method (b) according to the present invention preferably has a Cr content within a range from 22 to 70 at% within a depth of 50 angstroms from the surface at a step before the oxidation treatment is carried out. When the Cr content is less than 22 at%, durability is not sufficiently improved. In addition, when it exceeds 70 at%, the layer is made brittle and cracks are liable to develop on the surface.

Further, as oxidizing conditions of the composition modulated Co-Cr or Co-Cr-M layer preferably has a heating temperature of 150 to 450°C and a partial oxygen pressure in an oxidizing atmosphere within a range from of $10^{-2}$ to $10^3$ Torr from a view point of the sliding characteristic. When the temperature is 150°C or less, atoms are insufficiently diffused and thus the Cr rich oxide layer is difficult to be formed, and when it is 450°C or more, the magnetism and structure of a thin layer of Co-Cr, Co-Cr-M and the like are changed. Co and Cr are diffused to the uppermost layer surface through the oxide layer and oxidized. Since, however, a diffusing speed of Co ions is greater than that of Cr ions, when oxidation is carried out for a long time, a Co rich oxide layer is formed on the uppermost layer surface prior to the formation of the Cr rich oxide layer and thus the Co rich oxide layer is gradually thickened. Although the existence of the Co rich oxide layer on the uppermost layer surface is effective to reduce the friction coefficient, the durability is deteriorated when it becomes too rich. However, the growth of the Co rich oxide layer can be restricted and the Cr rich oxide layer which sufficiently improves the sliding characteristic can be obtained in such a manner that an oxidization treatment time is determined such that oxidation is sufficiently achieved and the Co ions are not remarkably diffused.

The composition modulated Co-Cr or Co-Cr-M layer can be formed by either an one-step method or a two-step method. In the case of the one-step method, when, for example, electron beams are irradiated from a Co-Cr alloy evaporating source, Co and Cr are evaporated in different directions, respectively, so that a Co vapor preferentially deposits on a rotating can on the forward side thereof in the rotating direction and a Cr vapor preferentially deposits on the deposited Co layer as if it is laminated thereon, whereby the Cr rich composition modulated layer can be obtained. In the case of the two-step method, first, a first perpendicular or oblique vapor deposition layer of Co-Cr or Co-Cr-M which mainly constitutes a magnetic layer is formed and then a second perpendicular or oblique vapor deposition layer which contains more compositional ratio of Cr than the first vapor deposition layer, whereby the composition modulated layer can be obtained.

## Examples

The present invention will be described in detail with reference to the examples.

### Example 1

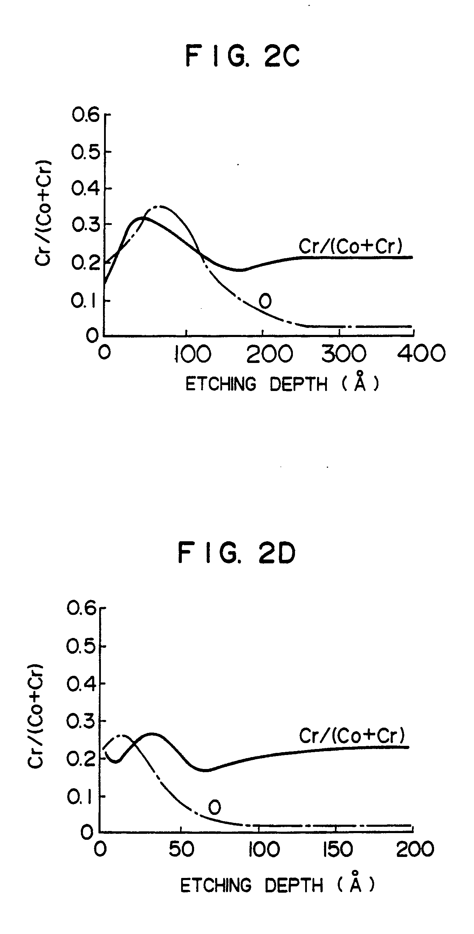

A $Co_{78}Cr_{22}$ layer having a thickness of 0.23 micron meter was formed on four heat resistant glass substrates having a diameter of 5.25 inches by a high frequency sputtering method. The sputtering was carried out under the conditions of an Ar pressure of 5 m Torr and a layer depositing speed of 2 angstroms/sec. The four specimens made as described above were exposed to oxygen plasma having a pressure of 10 to 20 Torr for 0 to 10 minutes in the state that the substrate thereof was heated at 100°C. They were classified to a specimen A, specimen B, specimen C, and specimen D depending upon a difference of the exposing time. The specimen A was exposed to the oxygen plasma for 0 minute, the specimen B was for 2 minutes, the specimen C was for 7 minute, and the specimen D was for 0.6 minutes. There after, perfluoropolyether, FOMBLIN (made by MONTEDISON Co., Ltd.) having a concentration of 0.1 wt% was applied to the surface of each of the specimens and the durability thereof was evaluated. The durability of the specimens was evaluated by a sphere sliding test, and a number of sliding times required to make a scratch on the Co-Cr recording layer was defined as a sliding resistant strength when the test was carried out under the conditions that a pressing load of a sliding element was 20 g and a relative speed was 2m/sec. Further, a compositional analysis in depth direction of Further, a compositional analysis in a depth direction of the Co-Cr layer was carried out by the Auger electron spectroscopy (hereinafter, referred to as Auger analysis) under the following conditions. Figure 2 shows the result of the test, wherein a horizontal axis represents an etching depth and a vertical axis represents a peak intensity of oxygen and a Cr existing ratio [Cr/(Co + Cr)]. When the Auger analysis was carried out, an Ar etching treatment was effected for 10 seconds to remove gas absorbed into the surface of the specimens to be analyzed. Table 1 shows the result of measurement of the sliding resistant strength of the specimens.

Table 1

| Specimen | Sliding Resistant Strength (Times) |
|---|---|
| A | 0 - 10 |
| B | $5 \times 10^5$ - $1 \times 10^6$ |
| C | 300 - 800 |
| D | 2000 - 2500 |

As apparent from the result shown in Figure 2 and Table 1, it is found that the Co-Cr layer, in which the peak of an oxygen content and the peak of a Cr existing ratio are positioned in this order from the layer surface and the peak value of the Cr existing ratio is 0.3 or more, exhibits excellent durability.

### Example 2

The manufacturing method (a) according to the present invention will be described below in more detail with reference to the example.

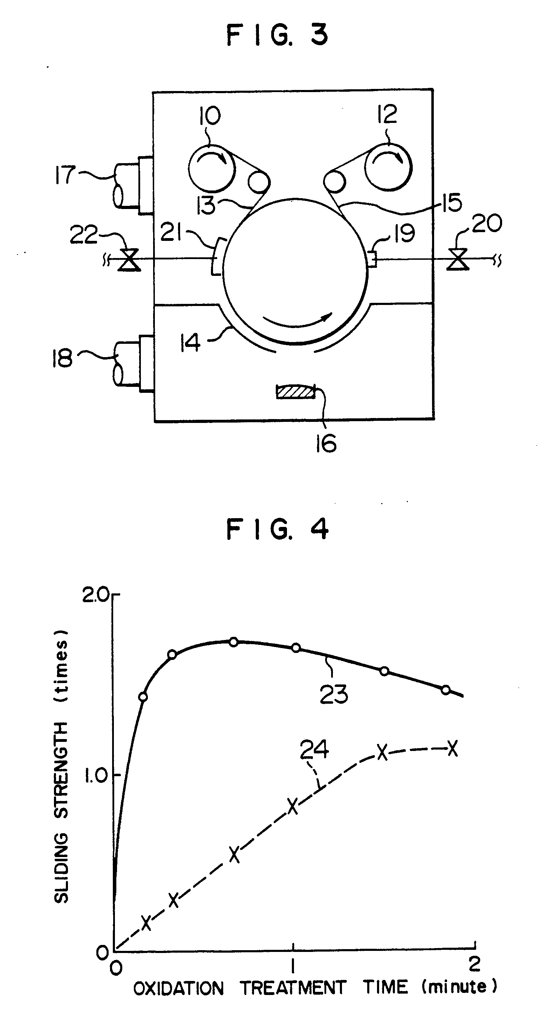

A Co-Cr layer was formed on a polyimide layer substrate 15 having a thickness of 40 micron meters (UPILEX-S type made by Ube Kosan K.K.) using the vacuum winding vapor deposition apparatus shown in Figure 3. The layer was formed at a speed of 5000 to 7000 angstroms/sec, a layer thickness was made to 3000 angstroms and a Cr content in the layer was 19.5 at%, and a can temperature was 230°C while the layer was formed.

After the thus formed layer had been wound around a winding roll 12, the can 13 was heated at 320°C and a predetermined amount of an oxygen gas was introduced into boxes 19 and 21 through variable leak valves 20 and 22, and then the surface of the Co-Cr layer was oxidized while the layer was traveled in a reverse direction.

Note that a partial oxygen pressure in the box 19 in which the first oxidation was carried out was set to 4 to 6 Torr and 50 Torr and a partial oxygen pressure in the box 21 in which the second oxidation was carried out was constant at 50 Torr. In addition, a length of the box 19 in a traveling direction was set to one third of that of the box 21. Therefore, a treatment time in the box 21 was three times as long as that in the box 19.

Figure 2 shows the relationship between sliding strength and oxidization treatment time of the Co-Cr layer made by the two-step oxidization method according to the present invention and the Co-Cr layer made by the one-step oxidization method. Note that the treatment time in the horizontal axis in Figure 4 is a total time of the oxidization treatment times of the first step and the second step. A sliding strength of the Co-Cr layer was evaluated by a number of sliding times required to make a scratch on a recording layer under the conditions of a pressing load of a sliding element (sphere made of stainless steel having a diameter of 10 mm) of 20 g and a relative speed of 1 m/sec. Figure 4 shows the Co-Cr layer made by the two-step oxidation method by a solid line (23) and the Co-Cr layer made at a partial oxygen pressure of 50 Torr both in the first and second steps by a dotted line (24).

As apparent from the characteristic curve shown in Figure 4, the Co-Cr layer made by the two-step oxidation method according to the present invention greatly improved the sliding strength in a very short oxidation treatment time, whereas the Co-Cr layer made by the one-step oxidation method in which the partial oxygen pressure was kept constant could not increase the sliding strength without increasing the treatment time.

Note that it is confirmed that the Co-Cr layers obtained by these methods have the peak of an oxygen content and the peak of a Cr existing ratio to (Co + Cr) or (Co + Cr + M) within a depth of 20 nm from the surface thereof.

Example 3

The manufacturing method (b) according to the present invention will be described below in more detail with reference to the example.

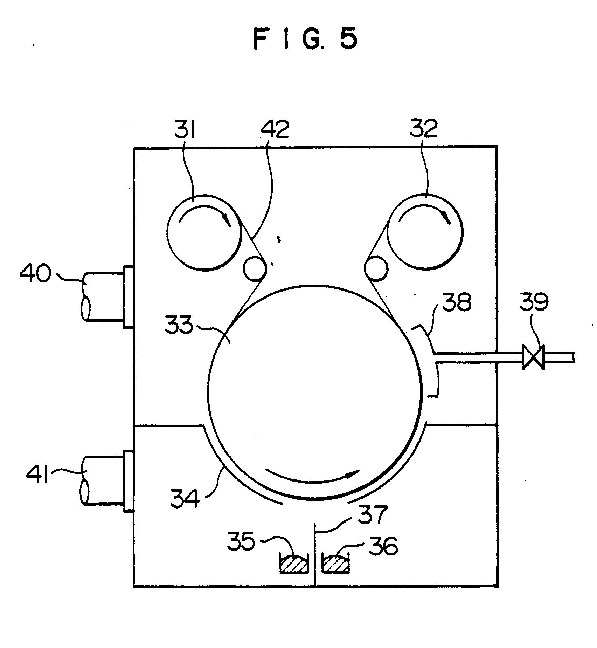

A Co-Cr perpendicularly magnetized layer (layer thickness: about 2700 angstroms, Cr content in the layer: 20.3 at%) mainly constituting a recording layer was formed by the first Co-Cr evaporation source 35 (initial alloy composition: $Co_{86}Cr_{14}$ using the continuously winding vapor deposition apparatus shown in Figure 5, while a polyimide film substrate 32 having a thickness of 10 micron meters (UPILEX-S type made by Ube Kosan K.K.) was traveled along a can 33 heated at 270°C, and a Cr rich composition modulated layer (layer thickness: about 300 angstroms) was formed thereon by the second Co-Cr evaporation source 36 following to the above process. Note that a Cr content of the Cr rich composition modulated layer was changed within a range from 0 to 100 at% depending upon the composition of the second evaporation source 36.

The thus formed Co-Cr medium was once wound around a winding roll 32. Next, after a temperature of the can has been set to 300°C, an oxygen gas was introduced through a variable leak valve 39 to set a partial oxygen pressure in an oxidation treatment box 38, to 20 Torr, and oxidation was carried out while the layer was traveled in a reverse direction. An oxidizing time was set to 20 sec which was similar to the time during which the layer passed through the box 38.

A sliding characteristic of the thus formed surface oxidized Co-Cr layer was evaluated by a number of sliding times ($10^3$ times) required to make a scratch on a recording layer under the conditions of a pressing load of a sliding element (sphere made of stainless steel having a diameter of 5 mm) of 10 g and a relative speed was 2.4 m/sec. Note that when the sliding characteristic was evaluated, a perfluoropolyether lubricant was coated on the surface of the Co-Cr layer to a thickness of about 100 angstroms. Table 2 shows the result of measurement.

6

Table 2

| Cr Content in Composition Modulated Layer (at%) | Sliding Strength ($10^3$ times) | Existence of Crack |
|---|---|---|
| 0 | 0 | |
| 12.8 | 0.5 - 0.8 | No |
| 21.0 | 1.1 - 2.0 | No |
| 22.3 | 5.3 - 8.6 | No |
| 38.1 | 5.9 - 8.8 | No |
| 53.7 | 5.1 - 7.9 | No |
| 67.2 | 4.8 - 6.9 | No |
| 70.7 | 3.2 - 4.8 | Yes |
| 100.0 | 2.6 - 3.1 | Yes |

As apparent from the result shown in Table 2, it is found that when a Cr content in the surface of the composition modulated layer exceeded about 22 at%, the sliding characteristic was improved, whereas when it exceeded 70 at%, cracks developed on the layer surface.

Note that it is confirmed that the Co-Cr layers obtained by these methods have the peak of an oxygen content and the peak of a Cr existing ratio to (Co + Cr) or (Co + Cr + M) within a depth of 20 nm from the surface thereof.

## Claims

1. A magnetic recording medium comprising a non-magnetic substrate and a recording magnetic layer on the substrate or on an underlayer which is on the substrate, the magnetic layer comprising a Co-Cr alloy or a Co-Cr-M alloy wherein M is selected from Pt, Ni and Ta having a Cr-content ratio expressed as the ratio of the Cr-content to the total content of Co + Cr or Co + Cr + M, the magnetic layer having a peak of oxygen content and a peak of Cr-content ratio each located within 20 nm from the surface of the magnetic layer, the oxygen content peak being nearer the surface of the magnetic layer than the Cr-content ratio peak.

2. A medium according to claim 1 wherein the magnetic layer comprises a Co-Cr or Co-Cr-M alloy and oxides of Co and Cr, the composition of the layer varying according to the distance from the surface of the layer.

3. A medium according to claim 1 or claim 2 wherein the peak value of the Cr-content ratio is 0.3 or more.

4. A medium according to any one of claims 1 to 3 wherein the magnetic layer comprises a metal alloy magnetic pseudo-layer, a hard pseudo-layer and a low friction pseudo- layer.

5. A medium according to claim 4 wherein the hard pseudo-layer is mainly composed of $Cr_2O_3$ and the low friction pseudo-layer is mainly composed of CoO.

6. A process for producing a magnetic recording medium according to any one of claims 1 to 5 comprising oxidising a magnetic layer comprising a Co-Cr or Co-Cr-M alloy, by heating the magnetic layer in an oxidising atmosphere to form a surface oxide layer, the partial oxygen pressure in the oxidising atmosphere being lower at an initial stage of oxidation than at a later stage thereof.

7. A process according to claim 6 wherein the oxidation is conducted in at least two steps, the partial oxygen pressure during an initial step being from $1 \times 10^{-2}$ to 10 Torr, and the partial oxygen pressure during the final stage being from 10 to 1000 Torr.

8. A process for producing a magnetic recording medium according to any one of claims 1 to 5 wherein a Cr rich composition-modulated Co-Cr or Co-Cr-M layer is formed in the vicinity of the surface of the magnetic layer and the magnetic layer is oxidised by heating in an oxidising atmosphere.

9. A process according to claim 8 wherein a Cr-rich composition-modulated Co-Cr or Co-Cr-M layer is formed having a Cr content from 22 to 70 at% within a depth of at least 50 angstroms from the surface of the magnetic layer and the magnetic layer is oxidised.

10. A process according to any one of claims 6 to 9 wherein the magnetic layer is heated at a temperature from 150° C to 450° C.

FIG. 1

Co-Cr MAGNETIC LAYER

5 LOW FRICTION LAYER

20nm

3 HARD LAYER

7 NON-MAGNETIC SUBSTRATE

FIG. 2A

FIG. 2B

# F I G. 2C

# F I G. 2D

# F I G. 3

# F I G. 4

# F I G. 5